# EUROPEAN PATENT SPECIFICATION

(11) **EP 3 173 274 B1**
(45) Date of publication and mention of the grant of the patent: **26.12.2018**
(21) Application number: 16200485.7
(22) Date of filing: 24.11.2016
(51) Int. Cl.: B60K 13/04, B62D 25/08, B62D 43/04

(54) **VEHICLE BODY STRUCTURE**
FAHRZEUGAUFBAUSTRUKTUR
CARROSSERIE DE VÉHICULE

(30) Priority: 24.11.2015 JP 2015228353
(43) Date of publication of application: 31.05.2017
(73) Proprietor: MITSUBISHI JIDOSHA KOGYO KABUSHIKI KAISHA, Tokyo 108-8410 (JP)
(72) Inventor: ITAYA, Daisuke, Tokyo, Tokyo 108-8410 (JP)
(74) Representative: Regimbeau

(56) References cited:
- FR-A1- 2 991 647
- JP-A- 2008 265 689
- JP-A- 2009 143 262
- US-A1- 2004 142 232

## Description

### FIELD

The present invention relates to a vehicle body structure equipped with a tank of additive for exhaust purification.

### BACKGROUND

Conventionally, as a vehicle equipped with an exhaust purification system for purifying the exhaust gas of the engine, a vehicle equipped with a tank of the additive having a reduction action on the purification target substance has been known. If the purification target substance is nitrogen oxides (NOx), additive such as aqueous urea solution or aqueous ammonia solution is stored inside the tank. Further, an arrangement position of the tank, for example, is suggested to be set on a bottom of a vehicle body that is an external space of a vehicle interior. By such a layout, a decrease in the vehicle interior comfort due to leakage of additive is prevented, and the replenishment workability of the additive is improved (see JP 4826612 B1, JP 4924352 B1, and JP 5194543 B1). JP 2008265689 A, JP 2009143262 A, FR 2991647 A1, and US 2004/142232 A1, which describes a structure according to the preamble of claim 1, disclose a structure including a tank for storing solution used for a vehicle.

However, by providing the tank on the bottom of the vehicle body, chipping (stepping-stone) from the road surface or contact with the road surface easily occurs, and the protection of the tank may be lowered. In particular, in a low-floor type vehicle, because the distance between the floor panel of the vehicle interior and the road surface is short, there is a risk of deformation or breakage of the tank. Meanwhile, although it is also possible to improve the protection of the tank by adding a protective member around the tank, there is a need to reduce the volume of the tank by the attachment of the protective member, and the utilization efficiency of the space is lowered. In addition, the vehicle body weight or the vehicle cost increases by the protective member.

### SUMMARY

### TECHNICAL PROBLEMS

The present invention has been made in view of the aforementioned problems, and an object thereof is to provide a vehicle body structure capable of improving the protection of the tank, while saving a space. Further, without being limited to this object, another object of the present invention is to obtain the function and effect that cannot be obtained by conventional techniques, as a function and effect derived from each configuration illustrated in "DESCRIPTION OF EMBODIMENTS" to be described later.

### SOLUTION TO PROBLEMS

According to the present invention, a vehicle body structure as defined by the accompanying claims is provided.

### ADVANTAGEOUS EFFECTS

By disposing the tank in a space surrounded by the spare tire and the guard bar, it is possible to enhance the protection of the tank, while saving the space.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
Fig. 1 is a bottom view of a vehicle to which a vehicle body structure of an embodiment is applied.
Figs. 2A and 2B are perspective views of a tank mounted on the vehicle.
Fig. 3 is a top view in which the vehicle body structure is viewed from the top.
Fig. 4 is a rear view illustrating the vehicle body structure (a view taken from an arrow A of Fig. 3).
Fig. 5 is a cross-sectional view illustrating the vehicle body structure (a cross-sectional view taken from a line B-B of Fig. 3).
Fig. 6 is a perspective view illustrating the vehicle body structure.

### DESCRIPTION OF EMBODIMENTS

A vehicle body structure according to an embodiment will be described with reference to the accompanying drawings. The embodiment described below is merely an example and is not intended to exclude various modifications and applications of techniques that have not been described in the following embodiment. Each configuration of the present embodiment can be embodied by various modifications without departing from the spirit. In addition, each configuration may be selected if necessary or may be appropriately combined.

### [1. Configuration]

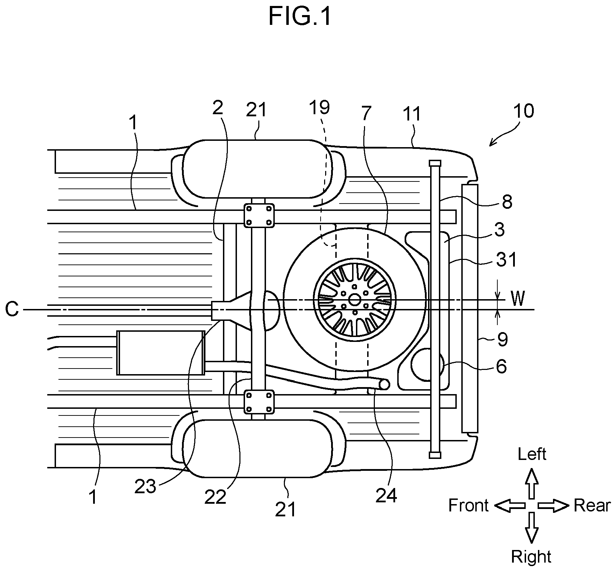

The vehicle body structure of the present embodiment is applied to a vehicle 10 illustrated in Fig. 1. The vehicle 10 is a pick-up truck type SUV (Sport Utility Vehicle) vehicle equipped with a urea SCR system. As the body structure of the vehicle 10, a separate frame structure in which the frame and the vehicle body are separated is employed. On the front side of the vehicle 10 on the frame, a box-like cab (vehicle interior) on which an occupant gets is disposed, and a platform 11 is disposed on the rear side thereof.

The vehicle 10 is ordinarily equipped with a tank 3 that stores an additive for exhaust purification (for example, an aqueous urea solution, aqueous ammonia solution or the like). The urea SCR system is a kind of exhaust purification systems for purifying nitrogen oxide (NOx) contained in the exhaust gas of the engine. In the urea SCR system of the present embodiment, the aqueous urea solution is injected to the upstream side of a NOx selective reduction catalyst interposed on an exhaust passage, and NOx is reduced to nitrogen on the catalyst, using ammonia generated by the hydrolysis of urea as a reducing agent. This kind of the urea SCR system is widely used in vehicles, working machines, vessels and power plants equipped with a diesel engine or a lean-burn engine.

The vehicle 10 is provided with a pair of side members 1 and a cross member 2 which serve as a frame. The side members 1 are hollow cylindrical structural members which are disposed at intervals in a vehicle width direction (a left-riqht direction), and extend in a vehicle length direction (a front-rear direction) of the vehicle 10. Further, the cross member 2 is a structural member which connects the left and right side members 1 in a ladder shape, and are provided at a plurality of positions at intervals in the front-rear direction. The arrangement direction of the side members 1 and the cross member 2 is a substantially horizontal direction. A cab and the platform 11 of the vehicle 10 are mounted on the frame via a vibration damping mount member.

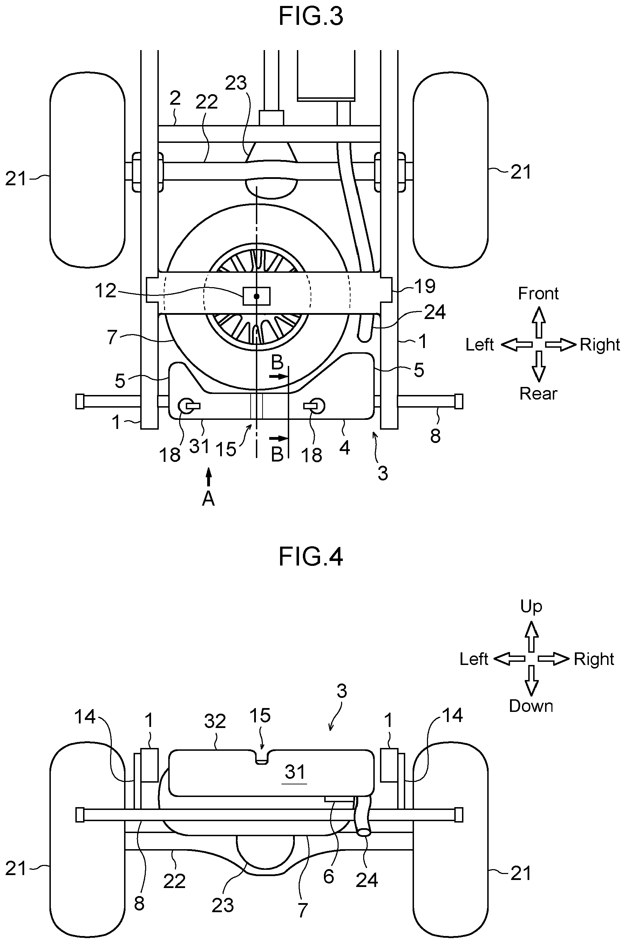

As illustrated in Fig. 1, a tank 3, a spare tire 7, a guard bar 8 and a bumper 9 are provided on the bottom surface side of the platform 11 of the vehicle 10. The spare tire 7 is fixed to a spare tire bracket 19 disposed behind an axle 22 of a rear wheel 21 so as to be attachable and detachable via fixtures 12 (see Fig. 3). The spare tire bracket 19 is a member that is attached to extend between the left and right side members 1. Further, the fixture 12 is a fixing device for fixing the spare tire 7 to the spare tire bracket 19, and is equipped with a mechanism that raises and lowers the spare tire 7 by winding-up and unwinding of a chain. By manually rotating a sprocket around which the chain is wound, the chain is wound up or unwound.

The position of the spare tire 7 in the front-rear direction is set on the front side of the vehicle 10 as much as possible in a range that does not interfere with the axle 22 and a differential unit 23 of the rear wheel 21. Further, the position of the spare tire 7 in the left-right direction is set such that a predetermined interval is secured to an exhaust tube 24. Fig. 1 illustrates the vehicle 10 in which the exhaust tube 24 is disposed to be biased to the right side (lower side in Fig. 1) of a vehicle body center line C, and the spare tire 7 is disposed to be biased to the left side (upper side in Fig. 1) of the vehicle body center line C by a dimension W.

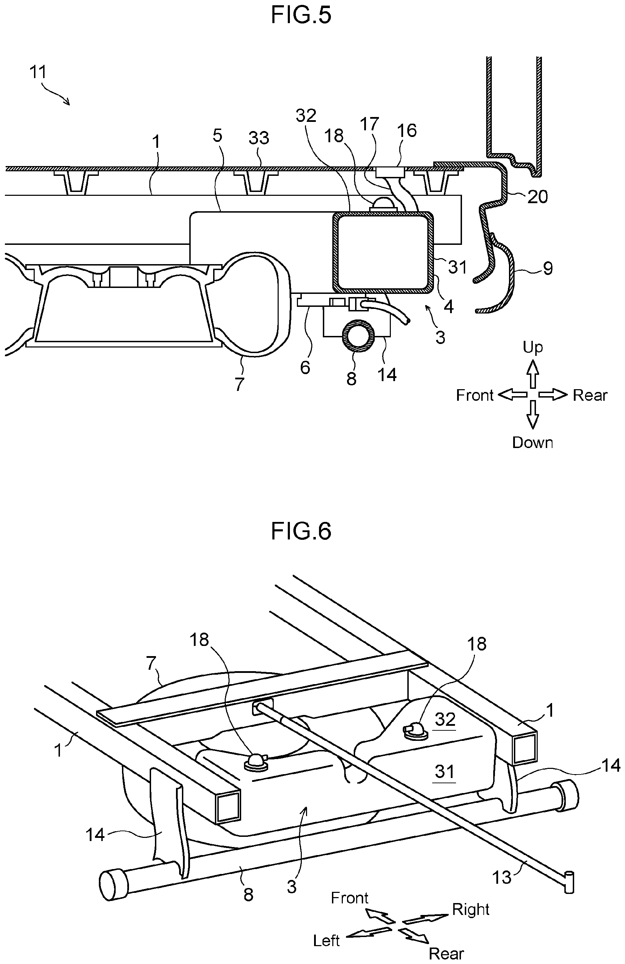

The guard bar 8 is a member that extends substantially horizontally toward the left-right direction behind the spare tire 7, and is firmly fixed to each of the left and right side members 1 via a bracket 14. The main role of the guard bar 8 is to prevent the penetration into the vehicle body bottom, while absorbing the impact force from the rear part of the vehicle body at the time of contact or collision with another vehicle or an obstacle. Therefore, the guard bar 8 is preferably disposed at a position closer to the rear end of the vehicle 10. In the example illustrated in Fig. 1, the bumper 9 is mounted to a rear end panel 20 located at the rear end of the platform 11, and the guard bar 8 is disposed slightly in front of the bumper 9 (see Fig. 5). Each of the both left and right ends of the guard bar 8 is stretched to the outside of the pair of side members 1 and is stretched to the outside of both of the left and right ends of the bumper 9. As a result, almost the entire rear end of the vehicle 10 is protected by the guard bar 8.

The tank 3 is a hollow container that stores the aqueous urea solution. As illustrated in Figs. 1 and 3 to 6, the tank 3 is disposed in the upper space of the guard bar 8, behind the spare tire 7 and in front of the bumper 9. The bumper 9 is disposed at a predetermined interval to the rear side 31 of the tank 3. As illustrated in Fig. 5, the height of the bottom surface of the tank 3 is set above the bottom surface of the spare tire 7, and above the lower end side of the bumper 9. Further, the height of the upper surface of the tank 3 is set below the upper surface of the side member 1. Thus, the tank 3 is in a state of being surrounded by the spare tire 7, the rear end panel 20, the bumper 9 and the side member 1, and the protection of the tank 3 is improved.

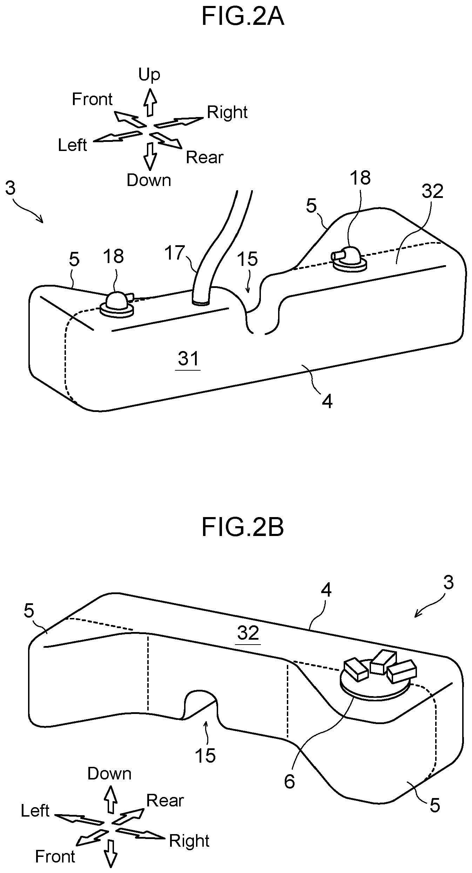

Here, in order to describe the shape of the tank 3, the part of the tank 3 will be conveniently described by being divided into the laterally-long section 4 and the triangular section 5. As illustrated in Figs. 2A and 2B, the laterally-long section 4 is a part extending in the left-right direction, and the triangular section 5 is a part provided at both ends of the laterally-long section 4. The laterally-long section 4 and the triangular section 5 form a single internal space rather than being internally partitioned. Further, the dimensions in the height direction of the laterally-long section 4 and the triangular section 5 are substantially constant. A broken line in Figs. 2A and 2B is a virtual line that represents a boundary between the laterally-long section 4 and the triangular section 5.

The laterally-long section 4 is a part that is disposed substantially in parallel to the guard bar 8 right above the guard bar 8. The dimension of the laterally-long section 4 in the left-right direction is set to be substantially identical to the width of the pair of side members 1. As illustrated in Fig. 1, when viewed in the bottom view of the vehicle 10, the guard bar 8 is disposed to overlap the laterally-long section 4. Thus, substantially the entire bottom surface of the laterally-long section 4 is protected by the guard bar 8. On the upper surface 32 of the laterally-long section 4, as illustrated in Figs. 2A and 2B, a recess 15 which is recessed in a groove shape is formed, and an air vent 18 for releasing the pressure at the time of a rise of the internal pressure of the tank 3 is provided.

The shape of the recess 15 is set to have a size that does not interfere with a detaching tool 13 for rotating the sprocket of the fixture 12, when detaching the spare tire 7 from the spare tire bracket 19. Further, the extending direction of the recess 15 is a direction extending from the fixture 12 of the spare tire 7 to the rear of the vehicle 10. The term "direction extending from the fixture 12 to the rear of the vehicle 10" may be a front-rear direction of the vehicle 10 as illustrated in Fig. 3 or may be a direction (a diagonally backward direction) that is slightly inclined from this direction. The direction may be set in accordance with the direction of the sprocket. Thus, as illustrated in Fig. 6, the rod-like detaching tool 13 is inserted to pass through the inner side of the recess 15. Accordingly, it is possible to raise and lower the spare tire 7 without detaching the tank 3, and the workability is improved.

The triangular section 5 is a part formed by enlarging the dimension in the front-rear direction at each of both ends of the laterally-long section 4. As illustrated in Fig. 1, the shape of the triangular section 5 when viewed in the bottom view is a shape (for example, a triangular shape) that corresponds to a gap between the circular spare tire 7 and the side member 1. That is, the shape of the triangular section 5 is set to correspond to the shape of the space interposed between the spare tire 7 and the side member 1. Furthermore, since the spare tire 7 is disposed to be biased to the left side of the vehicle body center line C, the right triangular section 5 has a shape that is slightly larger than that of the left triangular section 5 of the vehicle 10. This makes it possible to use an extra space as a storage space of the aqueous urea solution, thereby saving the space.

As illustrated in Fig. 2B, a supply module 6 is attached to the bottom surface side of the right triangular section 5 and the laterally-long section 4 adjacent thereto. The supply module 6 is a component obtained by combining various devices for supplying the aqueous urea solution stored in the tank 3 to an exhaust system (for example, a urea water injector provided on the exhaust passage), and is attached to pass through the bottom surface of the tank 3.

In the supply module 6, a pump for pumping the urea water to the urea water injector, a heater for heating the urea water to a suitable temperature, a filter for removing foreign substances in the urea water, a temperature sensor for detecting the temperature of the urea water, a residual quantity sensor for detecting the tank residual quantity of urea water and the like are equipped. Therefore, a piping material or a pump through which the urea water flows, an electric wiring for driving the heater, a signal line for transmitting the detection signals of the various sensors and the like are connected to the supply module 6. In the present embodiment, as illustrated in Fig. 5, the layout of the supply module 6 and the guard bar 8 is set such that the pump for the supply module 6 is disposed right above the guard bar 8.

On a floor surface 33 of the platform 11 of the vehicle 10, a urea water injection port 16 (the water injection port) connected in a state of communicating with the interior of the tank 3 is provided. Further, a water injection tube 17 is connected between the urea water injection port 16 and the tank 3. The water injection tube 17 is a hollow hose for replenishing the aqueous urea solution to the interior of the tank 3. As illustrated in Fig. 5, the position of the urea water injection port 16 is set at a position corresponding to a part right above the tank 3, of the floor surface 33 of the platform 11. Accordingly, the tube length of the water injection tube 17 is shortened.

### [2. Operation and Effect]

(1) In the aforementioned vehicle body structure, the spare tire 7 and the guard bar 8 are fixed to the side member 1, and the tank 3 of the aqueous urea solution is disposed behind the spare tire 7 and above the guard bar 8. In this way, by disposing the tank 3 in a space surrounded by the spare tire 7 and the guard bar 8, it is possible to reduce the possibility of the chipping from the road surface or the contact with the road surface, and it is possible to effectively utilize the free space. Accordingly, it is possible to enhance the protection of the tank 3, while saving the space. Furthermore, since the guard bar 8 is disposed below the tank 3, it is possible to prevent the contact between the bottom surface of the tank 3 and the road surface at the time of running on a step or a rough road.
   In particular, because the spare tire 7 is in front of the tank 3, when an external force (such as a rear collision load or a rear-end collision load) is applied from the rear, it is possible to elastically support the tank 3 with the spare tire 7. Further, if the tank 3 is laid out on the spare tire 7 (for example, see JP 5194543 B1), because it is difficult to ensure the dimension in the height direction of the tank 3, in some cases, the accuracy of the residual quantity of the tank detected by the residual quantity sensor decreases, or the detection itself may not be performed. In contrast, if the tank 3 is laid out behind the spare tire 7, because it is possible to ensure a dimension in the height direction of the tank 3, it is possible to improve the accuracy of the tank residual quantity detected by the residual quantity sensor.
(2) In the aforementioned vehicle body structure, the tank 3 is disposed above the guard bar 8, behind the spare tire 7 and in front of the bumper 9. Thus, in addition to the aforementioned effects, it is possible to protect the rear side 31 of the tank 3 by the bumper 9 and the rear end panel 20. Therefore, it is possible to enhance the protection of the tank 3. Since the side member 1 is disposed in the left-right direction of the tank 3, it is also possible to improve the protection of the side surface of the tank 3.
(3) In the aforementioned body structure, as illustrated in Fig. 1, the laterally-long section 4 of the tank 3 is disposed to be substantially parallel to the guard bar 8 right above the guard bar 8. Thus, it is possible to protect the bottom of the tank 3 by the guard bar 8 over substantially the entire left-right direction (the vehicle width direction), which makes it possible to further enhance the protection of the tank 3. For example, even when the vehicle 10 tries to climb over a step, the tank 3 does not come into contact with the road surface, and thus, it is possible to prevent deformation or breakage of the tank 3.
(4) As illustrated in Figs. 2A and 2B, at both of left and right ends of the tank 3, the triangular sections 5 having a shape corresponding to the triangular space interposed between the spare tire 7 and the side member 1 are provided. In this way, by providing a pair of triangular sections 5 at both ends of the laterally-long section 4, it is possible to sufficiently secure the volume of the tank 3. Further, because the shape of the triangular sections 5 is a shape corresponding to the gap between the spare tire 7 and the side member 1 when viewed in the bottom view, it is possible to utilize the space that has not been conventionally utilized, and the space can be further saved.
(5) As illustrated in Figs. 1, 2B, and 4, the supply module 6 equipped with the pump for the urea water is attached to one side close to the exhaust tube 24, of both ends of the laterally-long section 4. Thus, it is possible to warm the aqueous urea solution around the pump by the exhaust heat. Accordingly, it is possible to reliably operate the pump even in an extremely cold region. Further, because the aqueous urea solution is intended to be supplied to the exhaust system, it is possible to shorten the piping length from the supply module 6 to the urea water injector.
(6) As illustrated in Figs. 2A, 2B, 3 and 6, the recess 15 is provided on the upper surface 32 of the laterally-long section 4, and its extending direction is a direction extending from the fixture 12 of the spare tire 7 to the rear of the vehicle 10. Thus, it is possible to insert the detaching tool 13 toward the fixture 12 of the spare tire 7 from the rear of the vehicle 10. That is, it becomes possible to raise and lower the spare tire 7 without detaching the tank 3, which makes it possible to improve the workability of the attachment and detachment of the spare tire 7.
(7) As illustrated in Fig. 5, the urea water injection port 16 is provided on the floor surface 33 of the platform 11 of the vehicle 10. Accordingly, as compared to the case of providing the urea water injection port 16 on the side surface of the vehicle 10, it is possible to improve the aesthetics of the vehicle 10. Further, because the position of the urea water injection port 16 is located right above the tank 3, it is possible to shorten the piping length (the length of the water injection tube 17) from the urea water injection port 16 to the tank 3. Further, since the urea water injection port 16 is open upward, the replenishing operation of the aqueous urea solution is facilitated, and it is possible to improve the water injection workability.

### [3. Modified Example]

While the layout of the tank 3 in the vehicle 10 of the separate frame structure has been described in the aforementioned embodiment, it is also possible to apply the layout of the tank 3 to the monocoque vehicle. For example, the spare tire 7 and the guard bar 8 are fixed to the frame of the monocoque body, and the tank 3 is disposed in a space surrounded by the spare tire 7 and the guard bar 8. This makes it possible to obtain the same effects as the aforementioned embodiment.

While the aforementioned embodiment illustrates the vehicle 10 in which the spare tire 7 is disposed to be biased to the left side of the vehicle 10 as illustrated in Fig. 1 as an example, the position of the spare tire 7 in the vehicle width direction can be arbitrarily set. Further, the same also applies to the shape of the tank 3, and the tank 3, for example, may have a symmetrical shape in the left-right direction when viewed in a bottom view, and may have a shape biased to one of the right and left from the vehicle body center line C of the vehicle 10. At least, by disposing the tank 3 behind the spare tire 7 and above the guard bar 8, it is possible to obtain the same effects as the aforementioned embodiment.

While the aforementioned embodiment illustrates the vehicle 10 in which a single guard bar 8 is provided as an example, the number of guard bar 8 is arbitrary. For example, a plurality of guard bars 8 may be disposed in parallel in the front-rear direction in accordance with the size (the dimension in the front-rear direction) of the tank 3. By increasing the area of the bottom surface side of the tank 3 which is covered by the guard bar 8 when viewed in the bottom view, it is possible to further enhance the protection of the tank 3.

While the aforementioned embodiment illustrates the configuration in which the urea water injection port 16 is provided on the floor surface 33 of the platform 11 as an example, the arrangement position of the urea water injection port 16 is not limited thereto. For example, the urea water injection port 16 may be provided on the side gate or the rear gate of the platform 11, and may be provided on the side surface of the vehicle 10 (for example, a position adjacent to an oil supply port). Alternatively, the cap may be attached such that the aqueous urea solution can be directly replenished to the tank.

The invention thus described, it will be obvious that the same may be varied in many ways as defined by the following claims.

### REFERENCE SIGNS LIST

- 1: side member (frame)

- 2: cross member (frame)
- 3: tank
- 4: laterally-long section
- 5: triangular part
- 6: supply module (pressure pump)
- 7: spare tire
- 8: guard bar
- 9: bumper
- 10: vehicle
- 11: platform
- 12: fixture
- 13: detaching tool
- 14: bracket
- 15: recess
- 16: urea water injection port (water injection port)
- 17: water injection tube
- 18: air vent
- 19: spare tire bracket
- 20: rear end panel
- 21: rear wheel
- 22: axle
- 23: differential device
- 24: exhaust tube
- 31: rear side of tank 3
- 32: upper surface of laterally-long section 4
- 33: floor surface of platform 11 (platform floor surface)
- C: vehicle body center line

## Claims

1. A vehicle body structure comprising:
a frame (1) of a vehicle (10);
a guard bar (8) that extends in a vehicle width direction, and is fixed to the frame (1); and
a tank (3) that is disposed right above the guard bar (8), and adapted to store an additive for exhaust purification of the vehicle,
**characterized in that**:
the vehicle body structure further comprises a spare tire (7) that is fixed to the frame (1); that
the guide bar (8) extends behind the spare tire (7); that
the tank (3) is disposed behind the spare tire (7); that
the tank (3) has a laterally long section (4) that is disposed to be parallel to the guard bar (8) above the guard bar (8); and that
the tank (3) has a pair of triangular sections (5) that is formed in a triangular shape corresponding to a gap between the spare tire (7) and the frame (1) when viewed from a bottom and is disposed at both ends of the laterally long section (4).

2. The vehicle body structure according to claim 1, further comprising:
a bumper (9) that is disposed at a predetermined interval with respect to a rear side (31) of the tank (3),
**characterized in that** the tank (3) is disposed within a space surrounded by the spare tire (7), the guard bar (8) and the bumper (9) .

3. The vehicle body structure according to claim 1 or 2, further comprising:
a pump (6) for the additive that is attached to one end of two ends of the laterally long section (4), the one end being the one closer to an exhaust pipe (24) of the vehicle, and is disposed above the guard bar (8).

4. The vehicle body structure according to any one of claims 1 to 3, further comprising:
a fixture (12) that fixes the spare tire (7) to the frame (1); and
a recess (15) that is recessed in a groove shape in a direction from the fixture (12) toward the vehicle rear side, on an upper surface (32) of the laterally long section (4).

5. The vehicle body structure according to any one of claims 1 to 4, further comprising:
a water injection port (16) that is provided on a platform floor surface (33) of the vehicle (10), and is connected in a state of communicating with the interior of the tank (3).

## Patentansprüche

1. Fahrzeugaufbaustruktur, aufweisend:
einen Rahmen (1) eines Fahrzeugs (10);
einen Schutzbügel (8), der sich in einer Fahrzeugbreitenrichtung erstreckt und am Rahmen (1) befestigt ist; und
einen Tank (3), der direkt über dem Schutzbügel (8) angeordnet ist und angepasst ist zum Speichern eines Additivs zur Abgasreinigung des Fahrzeugs,
**dadurch gekennzeichnet, dass**
die Fahrzeugaufbaustruktur ferner ein Ersatzrad (7) aufweist, das am Rahmen (1) befestigt ist; dass
sich der Schutzbügel (8) hinter dem Ersatzrad (7) erstreckt; dass
der Tank (3) hinter dem Ersatzrad (7) angeordnet ist; dass
der Tank (3) einen seitlich langen Abschnitt (4) aufweist, der angeordnet ist, um parallel zum Schutzbügel (8) oberhalb des Schutzbügels (8) zu liegen; und dass
der Tank (3) ein Paar dreieckiger Abschnitte (5) aufweist, die in einer Dreiecksform ausgebildet sind, die, von unten betrachtet, einer Lücke zwischen dem Ersatzreifen (7) und dem Rahmen (1) entspricht und an beiden Enden des seitlich langen Abschnitts (4) angeordnet ist.

2. Fahrzeugaufbaustruktur nach Anspruch 1, ferner aufweisend:
einen Stoßfänger (9), der in einem im Voraus bestimmten Abstand in Bezug auf eine Rückseite (31) des Tanks (3) angeordnet ist,
**dadurch gekennzeichnet, dass** der Tank (3) in einem vom Reserverad (7), vom Schutzbügel (8) und vom Stoßfänger (9) umgebenen Raum angeordnet ist.

3. Fahrzeugaufbaustruktur nach Anspruch 1 oder 2, ferner aufweisend:
eine Pumpe (6) für das Additiv, die an einem Ende von zwei Enden des seitlich langen Abschnitts (4) angebracht ist, wobei das eine Ende das Ende ist, das sich näher an einem Auspuffrohr (24) des Fahrzeugs befindet und oberhalb des Schutzbügels (8) angeordnet ist.

4. Fahrzeugaufbaustruktur nach einem der Ansprüche 1 bis 3, ferner aufweisend:
eine Halterung (12), die das Reserverad (7) am Rahmen (1) befestigt; und
eine Aussparung (15), die in einer Nutform in einer Richtung von der Halterung (12) zur Fahrzeugrückseite auf einer oberen Oberfläche (32) des seitlich langen Abschnitts (4) vertieft ist.

5. Fahrzeugaufbaustruktur nach einem der Ansprüche 1 bis 4, ferner aufweisend:
eine Wassereinspritzöffnung (16), die auf einer Plattformbodenfläche (33) des Fahrzeugs (10) vorgesehen ist und in einem Verbindungszustand mit dem Inneren des Tanks (3) verbunden ist.

## Revendications

1. Structure de carrosserie de véhicule comprenant :
un bâti (1) d'un véhicule (10) ;
une barre de protection (8) qui s'étend dans le sens de la largeur du véhicule, et est fixée au bâti (1) ; et
un réservoir (3) qui est disposé juste au-dessus de la barre de protection (8), et adapté pour stocker un additif pour la purification de l'échappement du véhicule,
**caractérisée en ce que** :
la structure de carrosserie de véhicule comprend en outre la roue de secours (7) qui est fixée sur le bâti (1) ; **en ce que** :
la barre de guidage (8) s'étend derrière la roue de secours (7) ; **en ce que**
le réservoir (3) est disposé derrière la roue de secours (7) ; **en ce que**
le réservoir (3) a une section latéralement longue (4) qui est disposée pour être parallèle à la barre de protection (8) au-dessus de la barre de protection (8) ; et **en ce que**
le réservoir (3) a une paire de sections triangulaires (5) qui est formée selon une forme triangulaire correspondant à un espace entre la roue de secours (7) et le bâti (1), lorsqu'elle est observée depuis une partie inférieure et est disposée aux deux extrémités de la section latéralement longue (4).

2. Structure de carrosserie de véhicule selon la revendication 1, comprenant en outre :
un pare-chocs (9) qui est disposé à un intervalle prédéterminé par rapport à un côté arrière (31) du réservoir (3),
**caractérisée en ce que** le réservoir (3) est disposé à l'intérieur d'un espace entouré par la roue de secours (7), la barre de protection (8) et le pare-chocs (9).

3. Structure de carrosserie de véhicule selon la revendication 1 ou 2, comprenant en outre :
une pompe (6) pour l'additif qui est fixée sur une extrémité des deux extrémités de la section latéralement longue (4), la une extrémité étant celle qui est la plus proche d'un tuyau d'échappement (24) du véhicule, et est disposée au-dessus de la barre de protection (8).

4. Structure de carrosserie de véhicule selon l'une quelconque des revendications 1 à 3, comprenant en outre :
une fixation (12) qui fixe la roue de secours (7) au bâti (1) ; et
un évidement (15) qui est évidé selon une forme de rainure dans une direction allant de la fixation (12) vers le côté arrière du véhicule, sur une surface supérieure (32) de la section latéralement longue (4).

5. Structure de carrosserie de véhicule selon l'une quelconque des revendications 1 à 4, comprenant en outre :
un orifice d'injection d'eau (16) qui est prévu sur une surface de plancher de plateforme (33) du véhicule (10), et est raccordé dans un état de communication avec l'intérieur du réservoir (3).
